# EUROPEAN PATENT SPECIFICATION

(11) **EP 1 240 846 B1**
(45) Date of publication and mention of the grant of the patent: **01.03.2006**
(21) Application number: 02076437.9
(22) Date of filing: 22.08.1996
(51) Int. Cl.: A46B 7/06, A46B 5/00

(54) **Tootbrush**
Zahnbürste
Brosse à dents

(30) Priority: 25.08.1995 GB 9517450
(43) Date of publication of application: 18.09.2002
(62) Divisional of application: 99204325.7
(73) Proprietor: SmithKline Beecham Consumer Healthcare GmbH, 77815 Bühl (DE)
(72) Inventor: Halm, Hans, 44628 (DE); Krämer, Hans, Bussmatten 1 77815 Buehl (Baden) (DE)
(74) Representative: Walker, Ralph Francis

(56) References cited:
- WO-A-96/02165
- FR-A- 707 727
- US-A- 1 927 365
- US-A- 2 266 195
- US-A- 5 373 602

## Description

This invention relates to toothbrushes, in particular to toothbrushes having a flexibly linked region in their head.

Toothbrushes having a flexibly linked region in their head are known. For example WO 92/17093 discloses a toothbrush in which the head is divided into two or more segments which are flexibly and resiliently linked to each other and/or to the handle of the toothbrush. A particular form of the toothbrush of WO 92/17093 has a head which has grooves in the reverse face of the head from which the bristles extend, these grooves being filled with an elastomeric material to modulate the flexibility. The embodiments disclosed in have their grooves distributed in a generally uniform distribution over the reverse face of the head, or around the longitudinal mid point of the head, so as to enable the whole head to accommodate itself to the curved shape of the teeth. WO 96/02165 discloses toothbrushes with flexible heads similar in construction to those of WO 92/17093, and having a generally concave profile of bristle ends. DE-G 87 05 474.4 discloses a toothbrush in which the tip region of the head is hinged to a base region of the head and an operating button on the handle allows the tip region to fold relative to the base region.

It is an object of this invention to provide a toothbrush in which the flexibility of the head is concentrated in the tip of the head remote from the handle, so as to improve the ability of the toothbrush to clean surfaces of the teeth which face the back of the mouth.

According to this invention a toothbrush is provided according to claim 1.

The above-described construction of toothbrush concentrates flexibility of the head at the tip end of the toothbrush. The linking of the tip region and base region is in a manner which enables the tip region to pivot resiliently relative to the base region during toothbrushing, about a pivot axis which is in the plane of the bristle face and generally transverse to the longitudinal toothbrush axis such that bristles on the tip region can lean backwards, i.e. so that the free ends of bristles in the tip region swing toward the handle, assisting the bristles to clean surfaces of the teeth which face the back of the mouth. The flexible linking also helps to prevent excessive brushing pressure from being applied during toothbrushing.

Normally the head of the toothbrush will adjoin the handle of the toothbrush via a neck region between the base of the toothbrush head and the part of the handle which is held during use.

The base region is substantially rigid, that is, during the operation of brushing the teeth the base region does not significantly flex beyond the usual limits of flexing of a plastics material toothbrush head.

The link region is preferably in the longitudinal half of the head furthest from the base of the head. Suitably the base region extends for at least 60%, for example at least 75% of the distance between the base end of the head and the tip of the head.

The tip region is also substantially rigid, so that the tip region does not itself significantly flex apart from its folding or pivoting relative to the base region. The tip region may be of a variety of shapes accommodated to the shape of the tip of the head, e.g. circular, triangular (including ogival), rectangular, elongate, lozenge shape etc.

In its non-stressed condition, i.e. when not being used, the bristle face of the tip region forms an angle of less than 180° with the bristle face of the base region, e.g. 150°-179°, suitably 155°-170°. A suitable angle is one in which the free ends of the bristles on the handle side of the tip portion are in close proximity to, e.g. touching, the free ends of bristles on the tip side of the base region.

The link region between the tip region and the base region in this invention comprises an aperture in the head material between the tip and base regions which is bridged by means of thin links of flexible and resilient plastics material integral with the head. In this construction the head is effectively in two regions linked by such links. Such links may comprise thin spines, thin strips, or a continuous thin membrane, made of a both flexible and resilient plastics material. These spines, thin strips or membrane may be in the same plane as a substantially planar head, or may slope or may be curved out of planarity. The plastics material is the same plastics material as the tip and base regions but being flexible by virtue of thinness, e.g. the tip, base and links may be integrally moulded.

In this invention the link region between the tip region and the base region may comprise a composite region between the tip region and base regions, having structural elements made of both plastics material and an elastomeric material. For example there may be an elastomeric material in the aperture.

Relative to the thickness of the toothbrush head the strips in such a construction may be closer to the bristle face than to the back of the head. The plastics material parts in such a composite region may be thick enough to contribute materially to the flexibility and resilience of the link region, or alternatively they may be so thin as to contribute little to the flexibility and resilience of the link region, and may thus serve simply to retain the tip and head regions together before the elastomer is added.

The aperture may be open at the bristle face of the head and/or at the opposite face of the head, and may pass completely through the head. The aperture, may be narrow at the edges of the head and widen toward the centre of the head or vice versa.

The aperture may comprise a, groove with a depth of part of the thickness of the head such that the remaining plastics material at the bottom of the groove forms a thin link of plastics material. The groove may then be filled wholly or partly with elastomeric material to form a composite region.

Alternatively the aperture may pass, in places at least, completely through the thickness of the head, for example leaving bridges of head material crossing the aperture between places where the aperture, passes completely through the thickness of the head. Such an aperture may be wholly or partly filled with elastomeric material to thereby form a composite region.

The aperture extends widthways to the sides of the toothbrush head, and elastomeric material therein may be extended around the tip region of the head and/or around the base region of the head to form an elastomeric buffer around the toothbrush head to soften any impact of the toothbrush head with the gums of the user, and also to gently massage the gums. Alternatively elastomeric material may be provided around the tip region of the head to form an elastomeric buffer in a known manner e.g. as in FR 442832 and DE 36 28 722.

When the aperture, contains an elastomeric material the outer surface of this elastomeric material may have a corrugated surface, which may further help to control the flexibility of the link region.

The tip region and link are constructed and positioned such that the tip region can pivot resiliently relative to the base region during toothbrushing, about a widthways oriented pivot axis that crosses the tip region intermediate between its tip end and its base end.

Such a construction causes pivoting of the tip region about this axis intermediate along its length, i.e. causes the tip region to have a "see-saw" action in which during toothbrushing part of the tip region toward the tip of the head pivots in the bristle direction away from the plane which lies between the bristle face and the opposite face of the head, and the part of the tip region toward the base region of the head pivots in a direction opposite to the bristle direction away from the plane which lies between the bristle face and the opposite face of the head, or *vice versa.*

For example the tip end of the base region may be made in the shape of a two pronged fork-like frame, with a part of the tip region between the two prongs of the fork, and a link between the tip region and base region.

The base end of the tip region is in the form of two limbs which partly surround a part of the base region which extends in the tip direction between them, with the link between the tip region and the base region. For example the base end of the tip region may be made in the shape of a two pronged fork-like frame, with a part of the base region between the two prongs of the fork, and a link between the tip region and base region.

The elastomeric material may be an elastomeric material as commonly used in two-component toothbrushes, e.g. that described in EP 0336641, which can be bonded to plastics materials used for toothbrush handle manufacture. Such an elastomeric material can be injected into the toothbrush mould shortly after injection moulding of the plastics material parts of the toothbrush so that the hot plastics material fuses and bonds with the elastomeric material. This is a generally known process.

In the base region the bristles may be disposed in discrete generally circular section tufts in patterns which are generally known in the field of toothbrushes, for example in longitudinal or widthways rows at a generally conventional spacing. If fused in, the bristles may additionally or alternatively be disposed in "mats" of a cross section which may be circular or other than circular.

In the tip region the bristles may be disposed in discrete generally circular section tufts, or if fused in, the bristles may additionally or alternatively be disposed in "mats" of a cross section which may be circular or other than circular. In the tip region it is preferred to dispose the bristle tufts in either (i) a pattern of discrete tufts arranged in a generally circular or polygonal pattern, or (ii) a single tuft of generally rounded cross section perpendicular to the bristle face, or (iii) a tuft of generally "C" or "U" shaped cross section perpendicular to the bristle face having at least one of the limbs of the "C" or "U" aligned generally parallel to the longitudinal toothbrush axis and with the rounded bend of the "C" or "U" facing the end of the bristle face remote from the handle.

The ends of the bristles remote from the bristle face may be substantially coplanar. Alternatively the ends may undulate about a plane to accommodate the ends of the bristles to the undulating profile of the teeth or to lie in a " battlemented" shape to help clean the interdental spaces. Such undulating surface bristles are known. Additionally or alternately the ends of the bristles remote from the bristle face on the tip region may lie in a different plane to the ends of the bristles remote from the bristle face on the base region of the head. For example the plane of the said ends on the tip region may slope upwards away from the bristle face in the direction away from the handle. This may for example be achieved in the preferred embodiment of the toothbrush of the invention in which the bristle face of the tip region forms an angle of less than 180° with the bristle face of the base region.

The handle may be of generally conventional construction, and may for example include a folded flexible region, and grip pads of elastomeric material, as exemplified in EP 0336641. Elastomeric grip pads may alternatively or additionally be located on other parts of the toothbrush handle as convenient.

The toothbrush of the invention may be made by generally conventional injection moulding techniques, for example in which a plastics material " skeleton" is first made by injection moulding, then elastomer parts if present, are introduced by a subsequent injection moulding step, in which the elastomer is injected as a hot fluid and bonds to the plastics material. Such techniques, and suitable plastics materials and elastomer materials, are well known. If the link region includes an elastomer material then this may be injected with the same injection step as is used to inject elastomer grip pads, and these various regions of elastomeric material may be connected by moulding channels in a known manner.

In the embodiment of the invention in which the link region comprises the above-described composite region between the tip region and base regions, the composite region having structural elements made of both plastics material and an elastomeric material, the toothbrush is preferably made as follows. Firstly the plastics material skeleton is made by injection moulding, with the bristle face substantially flat, then the tip region is folded to the desired angle with the base region, then the elastomer is injected into the link region.

The bristles may also be of generally conventional construction and materials, and may be fastened into the bristle face by generally known techniques. For example small metal clips around the ends of bristles to be fixed into the head, which are then wedged into sockets in the bristle face. Alternatively the bristles may be fused into the head material, again using known techniques.

The invention will now be described by way of example only with reference to the accompanying figures in which Figs. 1 and 2 show respective, side and plan views of as toothbrush head of the invention, and Fig.3 shows a plan view without the elastomeric material, thereby showing the underlying construction of the head.

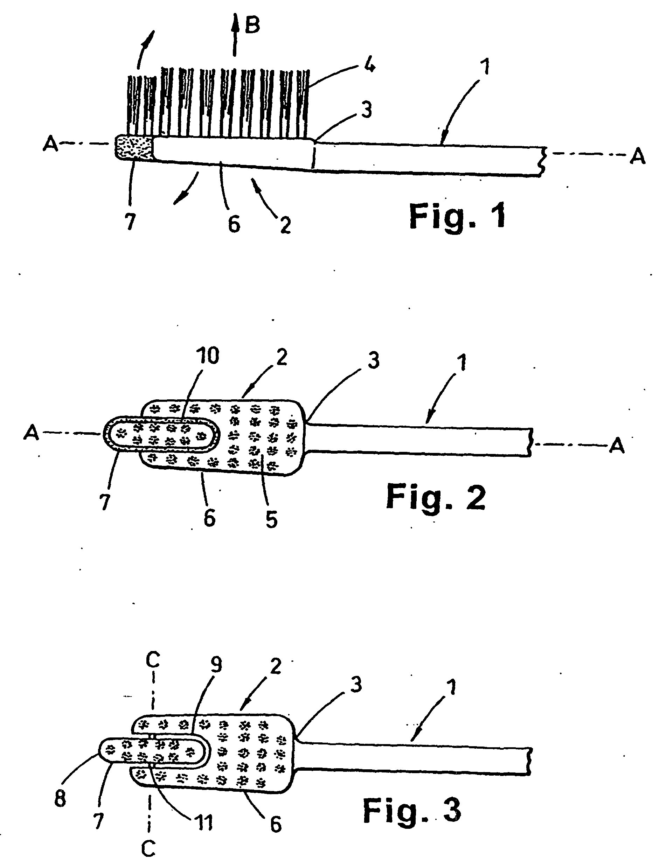

Referring to Figs. 1 to 3, a toothbrush comprises a handle 1 with a head 2 integrally adjoining the handle at a base end 3 of the head, the head 2 and handle I being disposed along a longitudinal toothbrush axis A-A, the head 2 having bristles 4 extending from a bristle face 5 of the head in a general bristle direction B

The tip region (7) is constructed to pivot resiliently relative to the base region (6), during toothbrushing, about a widthways oriented pivot axis that crosses the tip region (6) intermediate between its tip end and its base end. In Fig. 3 the toothbrush head is shown without elastomeric material.

The head 2 comprises two regions. A substantially rigid base region 6 integral with the toothbrush handle 1 extends from the base end 3 of the head 2 to a distance in the longitudinal half of the head 2 furthest from the base 3 of the head. A tip region 7 extends from the extreme tip 8 of the head 2 toward the base region 6. Both the base region 6 and tip region 7 are bristle 4 bearing.

The tip region 7 is flexibly and resiliently linked to the base region 6 by a flexible link which comprises an aperture 9 in the head 2 material between the tip region 7 and the base region 8. The aperture 9 is in the form of a groove, open at the bristle face 5 of the head 2, and extending transversely across the entire width of the head 2. The groove 9 contains a resilient elastomeric material 10, which extends around the tip end of the tip region 7 to form a buffer. The base region 8 integrally extends in the tip direction in the form of two limbs forming a two pronged fork which partly surrounds the tip region 7 which lies between the limbs. The aperture 9 partly surrounds the tip region 7 both on the side which faces the base region 8, and around part of the longitudinal sides of the tip region 7, e.g. a generally crescent shaped aperture.

The aperture 9 is in the form of a slot extending widthways across the head 2 of the toothbrush and entirely through its thickness, but incorporating thin integral bridges 11, shown in Fig. 3, which are provided at points widthways diametrically opposite each other on either longitudinal side of the tip region, and which provide pivot points about which the tip region 7 can pivot, as shown by the arrows in Fig. 1, about the axis C-C shown in Fig 3.

## Claims

1. A toothbrush comprising a handle (1) with a head (2), the head (2) having a base end (3) facing the handle (I) and a tip end (8) remote from the base end (3), the head (2) adjoining the handle (1) at the base end (3) of the head (2), the head (2) and handle (1) being disposed along a longitudinal toothbrush axis, the head (2) having bristles (4) extending from a bristle face (5) of the head (2),
the head (2) comprises a substantially rigid bristle-bearing base region (6) adjoining the toothbrush handle (1) and extending from the base end (3) of the head (2) to a link region (9,10) situated between the base end (3) and the tip end (8), and a substantially rigid bristle-bearing tip region (7) extending from the tip end (8) of the head (2) to the link region (9,10), ***characterised* in that**:
the tip end of the base region (6) comprises two limbs which partly surround a part of the tip region (7) which extends in the base direction between these two limbs,
the tip region (7) being flexibly and resiliently linked at the link region (9,10) to the base region (6),
the link region comprising an aperture (9) in the head material between the tip and base regions (6,7) which extends widthways to the sides of the toothbrush head (2), and which is bridged by means of thin links (11) of flexible and resilient plastics material integral with the head and provided at points widthways opposite each other on opposite sides of the tip region which provide pivot points about which the tip region (7) can pivot, and wherein in its non-stressed condition when not being used the bristle face (5) of the tip region (8) forms an angle of less than 180° with the bristle face (5) of the base region (6).

2. A toothbrush head according to claim 1 ***characterised* in that** the aperture (9) also contains an elastomeric material (10) such that the link region comprises a composite region having structural elements made of both plastic material and elastomeric material.

3. A toothbrush according to claim 1 or 2 ***characterised* in that** the tip end of the base region (6) is made in the shape of a two pronged fork-like frame, with a part of the tip region (8) between the two prongs of the fork.

4. A toothbrush according to claim 1, 2 or 3 ***characterised* in that** the linking of the tip region (8) and base region (6) is in a manner which enables the tip region (8) to pivot resiliently relative to the base region (6) during toothbrushing, about a widthways oriented pivot axis that crosses the tip region (8) intermediate between its tip end and its base end.

5. A toothbrush according to any one of the preceding claims ***characterised* in that** the link region is in the longitudinal half of the head (2) furthest from the base of the head (2).

6. A toothbrush according to any one of the preceding claims ***characterised* in that** the ends of the bristles (4) remote from the bristle face (5) on the tip region (7) lie in a different plane to the ends of the bristles (4) remote from the bristle face of the base region (6).

7. A toothbrush according to claim 2 ***characterised* in that** the link region comprises a groove (9) with a depth of part of the thickness of the head (2) such that the remaining plastics material at the bottom of the groove (9) forms a thin link of plastics material, the groove (9) being filled wholly or partly with elastomeric material (10) to form a composite region.

## Patentansprüche

1. Zahnbürste mit einem Griff (1) mit einem Kopf (2), bei der der Kopf ein Basisende (3), das dem Griff zugewandt ist, und ein von dem Basisende (3) entferntes vorderes Ende (8) besitzt, wobei der Kopf (2) an den Griff (1) an dem Basisende (3) des Kopfes (2) angrenzt und der Kopf (2) und der Griff (1) entlang einer Zahnbürstenlängsachse angeordnet sind und der Kopf (2) Borsten (4) aufweist, die sich von einer Borstenfläche (5) des Kopfes (2) erstrecken,
der Kopf (2) einen im wesentlichen steifen, borstentragenden Basisbereich (6), der an den Zahnbürstengriff (1) angrenzt und sich von dem Basisende (3) des Kopfes (2) zu einem Verbindungsbereich (9, 10) erstreckt, der zwischen dem Basisende (3) und dem vorderen Ende (8) gelegen ist, und einen im wesentlichen steifen borstentragenden vorderen Bereich (7) aufweist, der sich von dem vorderen Ende (8) des Kopfes (2) zu dem Verbindungsbereich (9, 10) erstreckt,
**dadurch gekennzeichnet, dass**
das vordere Ende des Basisbereichs (6) zwei Glieder aufweist, die teilweise einen Teil des vorderen Bereichs (7) umgeben, der sich in der Basisrichtung zwischen diesen beiden Gliedern erstreckt,
der vordere Bereich (7) an dem Verbindungsbereich (9, 10) flexibel und nachgiebig an den Basisbereich (6) verbunden ist,
der Verbindungsbereich eine Öffnung (9) in dem Kopfmaterial zwischen dem vorderen und dem Basisbereich (6, 7) aufweist, die sich der Breite entlang zu den Seiten des Zahnbürstenkopfes (2) erstreckt, und die mit Hilfe von dünnen Verbindungen (11) des flexiblen und elastischen Kunststoffmaterials integral mit dem Kopf überbrückt ist, welche einander gegenüberliegend an Punkten der Breite entlang an gegenüberliegenden Seiten des vorderen Bereichs vorgesehen sind und Schwenkpunkte vorsehen, um die der vordere Bereich (7) schwenkbar ist, und bei der im ungespannten und nicht benutzten Zustand die Borstenfläche (5) des vorderen Bereichs (8) einen Winkel von weniger als 180° mit der Borstenfläche (5) des Basisbereichs (6) bildet.

2. Zahnbürstenkopf nach Anspruch 1, **dadurch gekennzeichnet, dass** die Öffnung (9) ebenso ein Elastomer (10) enthält, so dass der Verbindungsbereich einen zusammengesetzten Bereich mit strukturellen Elementen aufweist, die sowohl aus Kunststoffmaterial als auch Elastomer hergestellt sind.

3. Zahnbürste nach Anspruch 1 oder 2, **dadurch gekennzeichnet, dass** das vordere Ende des Basisbereichs (6) in der Form von einem mit zwei Zinken versehenen gabelartigen Rahmen ausgeführt ist, wobei sich ein Teil des vorderen Bereichs (8) zwischen den beiden Zinken der Gabel befindet.

4. Zahnbürste nach einem der Ansprüche 1 bis 3, **dadurch gekennzeichnet, dass** die Verbindung des vorderen Bereichs (8) und des Basisbereichs (6) auf eine Art und Weise ausgeführt ist, die es für den vorderen Bereich (8) ermöglicht, während des Zähneputzens nachgiebig relativ zu dem Basisbereich (6) um eine in der Breitenrichtung orientierte Schwenkachse zu schwenken, die den vorderen Bereich (8) zwischen seinem vorderen Ende und seinem Basisende kreuzt.

5. Zahnbürste nach einem der vorangehenden Ansprüche, **dadurch gekennzeichnet, dass** der Verbindungsbereich sich in der Längshälfte des Kopfes (2) befindet, die am weitesten von der Basis des Kopfes (2) angeordnet ist.

6. Zahnbürste nach einem der vorhergehenden Ansprüche, **dadurch gekennzeichnet, dass** die Enden der Borsten (4) entfernt von der Borstenfläche (5) auf dem vorderen Bereich (7) in einer anderen Ebene liegen als die Enden der Borsten (4) entfernt von der Borstenfläche des Basisbereichs (6).

7. Zahnbürste nach Anspruch 2, **dadurch gekennzeichnet, dass** der Verbindungsbereich eine Nut (9) aufweist mit einer Tiefe eines Teils der Dicke des Kopfes (2) derart, dass das verbleibende Kunststoffmaterial an dem Boden der Nut (9) eine dünne Verbindung aus Kunststoffmaterial bildet, wobei die Nut (9) zur Ausbildung eines zusammengesetzten Bereichs vollständig oder teilweise mit Elastomer gefüllt ist.

## Revendications

1. Brosse à dents comprenant un manche (1) avec une tête (2), la tête (2) ayant une extrémité de base (3) faisant face au manche (1) et une extrémité de bout (8) éloignée de l'extrémité de base (3), la tête (2) étant contiguë au manche (1) par l'extrémité de base (3) de la tête (2), la tête (2) et le manche (3) étant disposés le long d'un axe longitudinal de la brosse à dents, la tête (2) ayant des soies (4) se prolongeant à partir d'une face de soies de la tête (2), la tête (2) comprenant une région porte-soies de base sensiblement rigide (6) contiguë au manche de la brosse à dents (1) et s'étendant depuis l'extrémité de base (3) de la tête (2) jusqu'à une région de liaison (9, 10) située entre l'extrémité de base (3) et l'extrémité de bout (8), et une région porte-soies de bout sensiblement rigide (7) s'étendant depuis l'extrémité de bout (8) de la tête (2) jusqu'à la région de liaison (9, 10), ***caractérisée* en ce que** :
l'extrémité de bout de la région de base (6) comprend deux bras qui entourent partiellement une partie de la région de bout (7) qui s'étend entre ces deux bras dans la direction de base,
la région de bout (7) est liée de façon flexible et élastique à la région de liaison (9, 10) avec la région de base (6),
la région de liaison comprend une ouverture (9) dans le matériau de la tête entre les régions de bout et de base (6, 7) qui s'étend dans le sens de la largeur vers les bords de la tête (2) de la brosse à dents, et qui est pontée au moyen de fins liens (11) en matériau plastique flexible et élastique faisant corps avec la tête et disposés en des points opposés l'un à l'autre dans le sens de la largeur sur les côtés opposés de la région de bout de façon à former des points de pivotement autour desquels la région de bout (7) peut pivoter, et dans laquelle, en état non sollicité lorsqu'elle n'est pas utilisée, la face des soies (5) de la région de bout (8) forme avec la face des soies (5) de la région de base (6) un angle inférieur à 180°.

2. Tête de brosse à dents selon la revendication 1 ***caractérisée* en ce que** l'ouverture (9) contient également un matériau élastomérique (10) de sorte que la région de liaison comprend une région composite ayant des éléments structuraux faits à la fois de matériau plastique et de matériau élastomérique.

3. Brosse à dents selon la revendication 1 ou 2 ***caractérisée* en ce que** l'extrémité de bout de la région de base (6) est réalisée sous la forme d'un cadre en fourche à deux branches, avec une partie de la région de bout (8) située entre les deux branches de la fourche.

4. Brosse à dents selon la revendication 1, 2 ou 3 ***caractérisée* en ce que** la liaison entre la région de bout (8) et la région de base (6) est conçue de manière à permettre à la région de bout (8) de pivoter de façon élastique par rapport à la région de base (6) pendant le brossage des dents, autour d'un axe de pivotement orienté dans le sens de la largeur qui croise la région de bout (8) de manière intermédiaire entre son extrémité de bout et son extrémité de base.

5. Brosse à dents selon l'une quelconque des revendications précédentes ***caractérisée* en ce que** la région de liaison est située dans la moitié longitudinale de la tête (2) la plus éloignée de la base de la tête (2).

6. Brosse à dents selon l'une quelconque des revendications précédentes ***caractérisée* en ce que** les extrémités des soies (4) éloignées de la face des soies (5) sur la région de bout (7) se situent dans un plan différent de celui des extrémités des soies (4) éloignées de la face des soies de la région de base (6).

7. Brosse à dents selon la revendication ***caractérisée* en ce que** la région de liaison comprend une rainure (9) avec une profondeur d'une partie de l'épaisseur de la tête (2) de sorte que le matériau plastique restant au fond de la rainure (9) forme un fin lien de matériau plastique, la rainure (9) étant totalement ou partiellement remplie d'un matériau élastomère (10) pour former une région composite.
